# EUROPEAN PATENT APPLICATION

(11) **EP 2 400 406 A1**
(43) Date of publication of application: **28.12.2011**
(21) Application number: 11167503.9
(22) Date of filing: 25.05.2011
(51) Int. Cl.: G06F 17/30

(54) **System and method of network data access management**

(30) Priority: 23.06.2010 US 821786
(71) Applicant: Dreamers Lab., Taipei Hsien (TW)
(72) Inventor: Lin, Kun-Yu, Taipei City 111 (TW)
(74) Representative: Lang, Christian

(57) **Abstract**

Disclosed is a system and method of network data access management, a client terminal sends out a file request to a server, said server transmits said file request to a database and fetches a file corresponding to said file request from said database and transmits it back to said client terminal, said server transmits and stores file information of said file into a virtual database, such that when said client terminal edits said file, it will also modify said file information of said corresponding file in said virtual database simultaneously, and upon finishing editing said file, said virtual database transmits said edited file information to said database through said server. Then, said database will modify said file in said database as based on said edited file information, thus decreasing number of access of said database by said client terminal, reducing bandwidth required significantly, and increasing efficacy of network data

## Description

### Field of the Invention

The present invention relates to a network data access technology, and in particular to a system and method of network data access management that is applicable to a cloud system.

### THE PRIOR ARTS

Nowadays, due to the rapid progress and development of the Information Technology (IT), almost all kinds of information can be transmitted and distributed to various parts of the world through the Internet, and a Blog Platform is also developed for displaying personal information, such as the much popular and widely utilized Blog is a typical example. In this platform, user may log on a specific website through a personal computer for providing photographs or drawings, and uploading them to a specific database, so that other users may download and view these photographs or drawings through logging onto other websites.

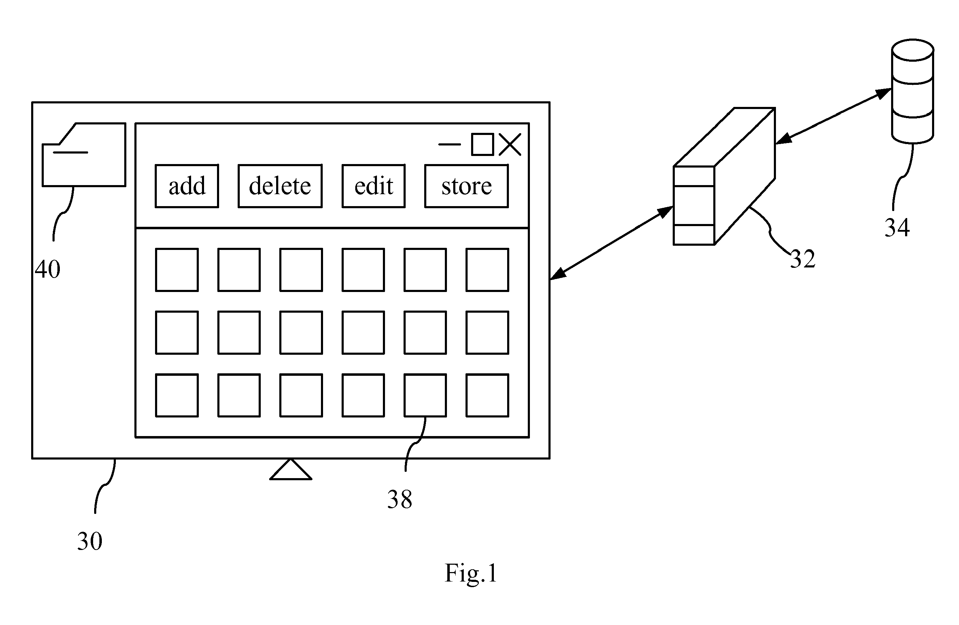

Refer to Fig. 1 for a schematic diagram of a network data access management system according to the prior art. As shown in Fig. 1, in the application of the system, a user terminal 30 sends out an access request to a network server 32, such that the network server 32 fetches the corresponding data set 40 and data 38 from a database server 34 connected thereto as based on the access request, and transmits them back to the user terminal 30. In this way, in editing data set 40 and data 38 by the user terminal 30, it will access the database server 34 continuously, and when it finishing the editing, it will send and upload the edited data set 40 and data 38 to the database server 34 for storage.

However, this way of network data access will cause considerable delay, since in the process of editing data file, the user terminal 30 will access the database server 34 continuously, and this kind of large amount accesses is certain to cause considerable delay, such that in the user terminal 30, the editing window frame may stop and be frozen, and when the user terminal 30 opens quite a few editing windows to perform editing data simultaneously, that may cause the broken-down of the user terminal 30, or even the disconnection between the user terminal 30 and the network server 32.

Therefore, presently, the performance and efficiency of the network data access management system of the prior art are not quite satisfactory and it has much room for improvement.

### SUMMARY OF THE INVENTION

In view of the problems and shortcomings of the prior art, the present invention provides a system and method of network data access management, wherein, database management technology in combined into a network system, such that through the improvement of the network data access system and method, the number of database access and bandwidth required can be reduced, so as to avoid the screen frame freezing or broken-down of client terminal, hereby effectively raising the efficiency of network data access.

A major objective of the present invention is to provide a system and method of network data access management, wherein, a virtual database is utilized to store file information, such that when editing data file by a client terminal, the file information in the virtual database is edited at the same time, thus upon finishing editing a data file, the final file information is transmitted to the database, hereby reducing significantly the number of database access required for the client terminal, decreasing the bandwidth required, and reducing effectively the freezing of the frame on the screen of the client terminal, while performing data editing.

Another objective of the present invention is to provide a system and method of network data access management, wherein, the efficiency of the client terminal connected to a database via a server can be raised significantly, thus it can be used enormously in a cloud system.

In order to achieve the above mentioned objective, the present invention provides a system and method of network data access management, comprising; a client terminal, a server, a database, and a virtual database. Wherein, the server serves as a relay of a connection of the client terminal, database, and the virtual database, and it receives a file request transmitted from the client terminal and fetches a corresponding file from the database and sends it back to the client terminal, meanwhile, it also transmits and stores file information of the file into the virtual database for storage. As such, in the process mentioned above, firstly, the client terminal is logged onto a website and is connected to a server, and it sends a file request to the server; then, the server will fetch a file corresponding to the file request from the database and transmits it back to the client terminal, meanwhile it will transmit file information of the same file into the virtual database for storing it therein, such that when the client terminal edits the file, it will update the file information in the virtual database in a synchronous manner; and finally, upon finishing editing the file, the edited file information will be transmitted from the virtual database via the server back to the database, and which will update the corresponding file in the database according to the received file information.

Further scope of the applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The related drawings in connection with the detailed description of the present invention to be made later are described briefly as follows, in which:

Fig. 1 is a schematic diagram of a network data access management system according to the prior art;

Fig. 2 is a schematic diagram of a network data access management system according to the present invention;

Figs. 3(a) to 3(c) are schematic diagrams of a system executing network data access management according to the present invention; and

Fig. 4 is a flowchart of the steps of a network data access management method according to the present invention.

### DETAILED DESCRIPTION OF THE PREFERRED EMBODIMENT

The purpose, construction, features, functions and advantages of the present invention can be appreciated and understood more thoroughly through the following detailed description with reference to the attached drawings.

The present invention provides a system and method of network data access management. Wherein, a virtual database is used to store file information of a file, such that when client terminal edits the file, it will also edit the file information in the virtual database simultaneously. Then, upon finishing editing the file, and final edited file information will be transmitted back to the database via a server, and the database will update the corresponding file contained therein according to the edited file information. In the following, the embodiments are described in explaining the technical characteristics of the present invention.

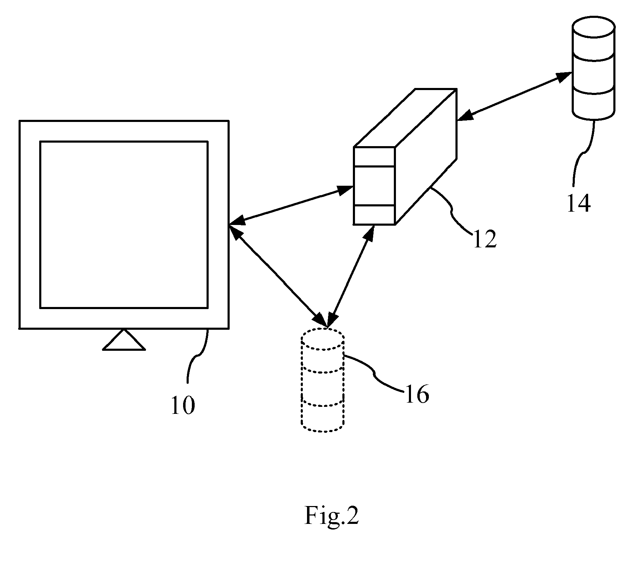

Firstly, refer to Fig. 2 for a schematic diagram of a network data access management system according to the present invention. As shown in Fig. 2, a client terminal 10, which can be a computer device, a mobile communication device, or a personal data assistant (PDA), is connected to a server 12, such that the client terminal 10 and the server 12 may communicate with each other through utilizing the HyperText Transfer Protocol (HTTP); and the server 12 is connected to a database 14, which contains at least a drawing file, an image file, a text file, or an animation film file. In the application of the system, the client terminal 10 may log onto a specific website and send out a file request to a server 12, which fetches a file corresponding to the file request from the database 14 and transmits it back to the client terminal 10, meanwhile it transmits the file information contained in the file, such as title, description, size ratio, security, and content type etc. into a virtual database 16 connected to the client terminal 10 and the server 12.

The virtual database 16 is provided with the same Document Object Model (DOM) structure as that of the database 14, and when the client terminal 10 edits a file, it also makes corresponding changes to the file information stored in the virtual database 16, such that the edited file information in the virtual database 16 is transmitted to the database 14 through the server 12, so that the database 14 is able to make changes to the corresponding file contained therein based on the edited file information. In addition, a plurality of files can be stored jointly together as a file set containing the file set information, such as title, verification, description, level and etc. Moreover, the virtual database 16 can be built in the client terminal 10.

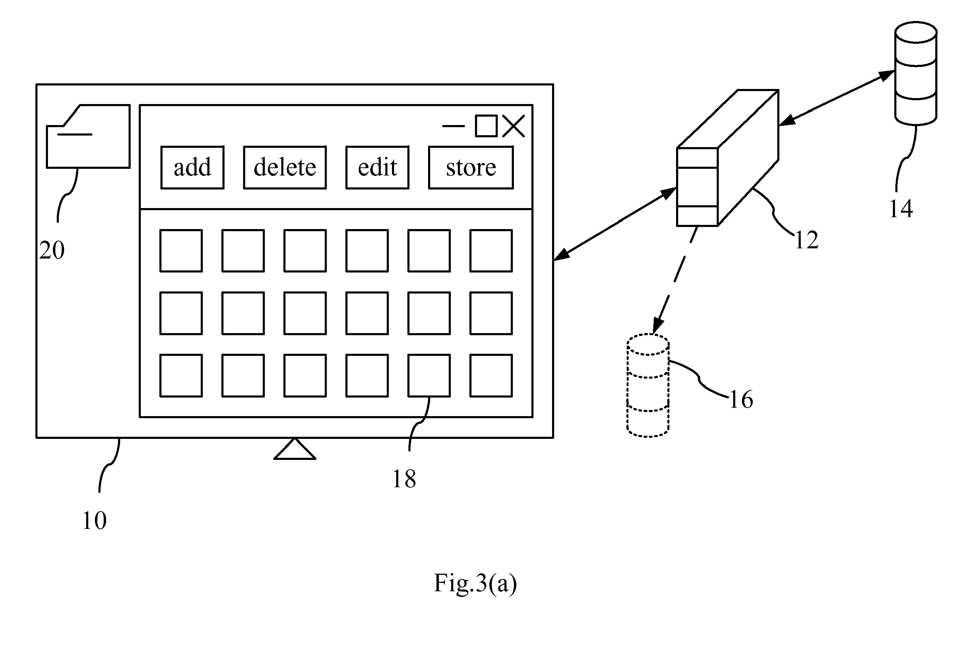

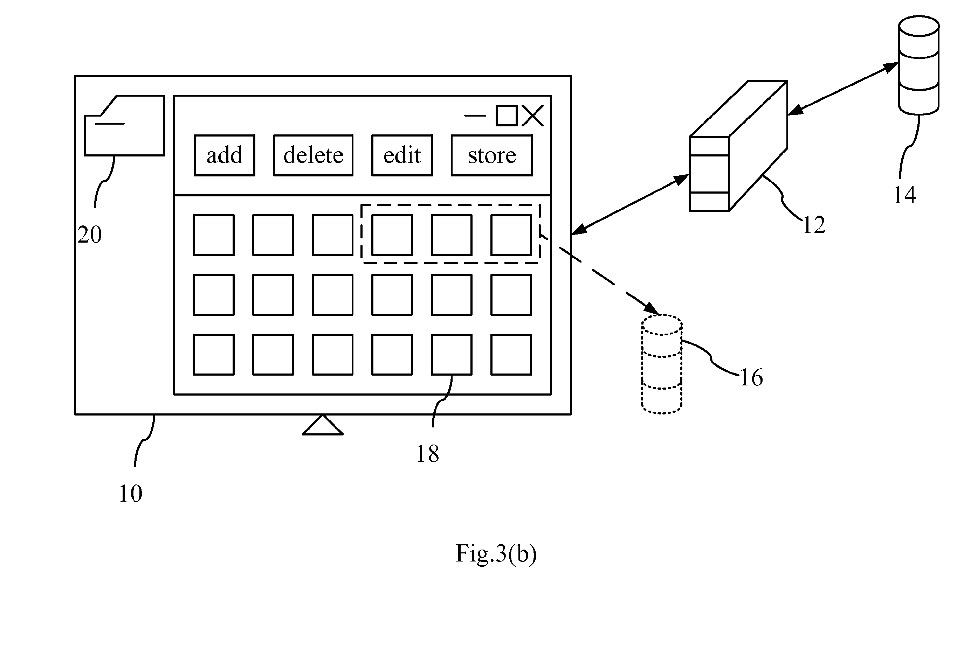

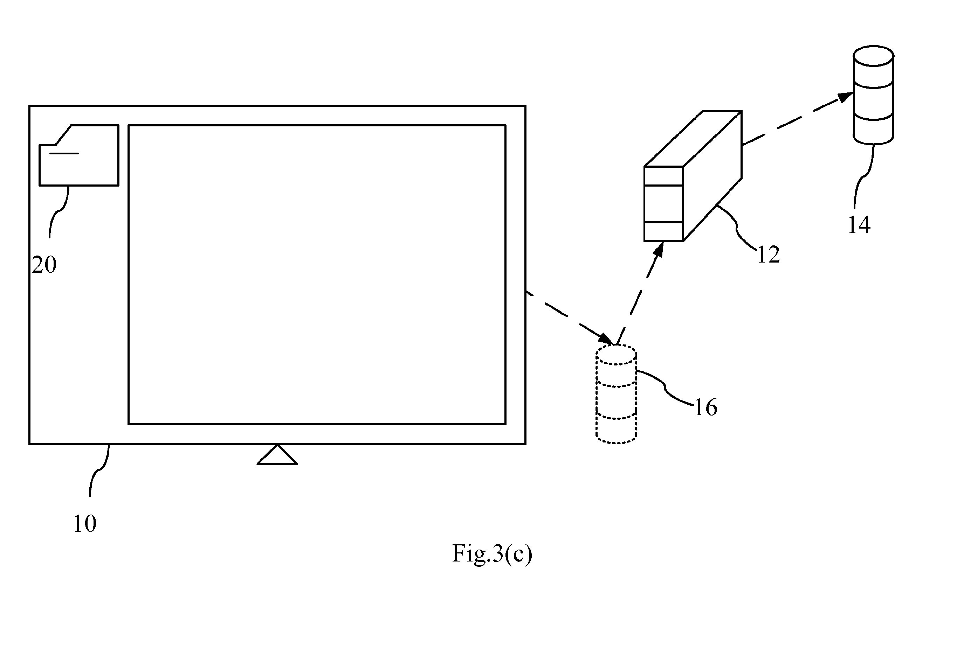

Next, refer to Figs. 3(a) to 3(c) for the schematic diagrams of a system executing network data access management according to the present invention. As shown in Figs. 3(a) to 3(c), in the application of the present invention, the client terminal 10 sends out a file request to a server 12, which transmit the file request to the database 14 and fetches the corresponding file set 20 and file 18 from the database 14, and transmits them back to the client terminal 10. In the process mentioned above, the server 12 also transmits and stores file information contained in the file set 20 and file 18 into the virtual database 16. Furthermore, the server 12 generates a web page and transmits it to the client terminal 10, such that the window screen of the client terminal 10 will display this web page. The client terminal 10 edits file 18 contained in the file set 20 through selection of items on the web page displayed on the window screen of the client terminal 10, meanwhile, it also makes changes to the file information in the virtual database 16 corresponding to the file 18. Finally, upon finishing editing the file and closing the window, the edited file information is uploaded from the virtual database 16 to the database 14 via the server 12, thus the database 14 will make corresponding changes to the file information contained in the file of database 14.

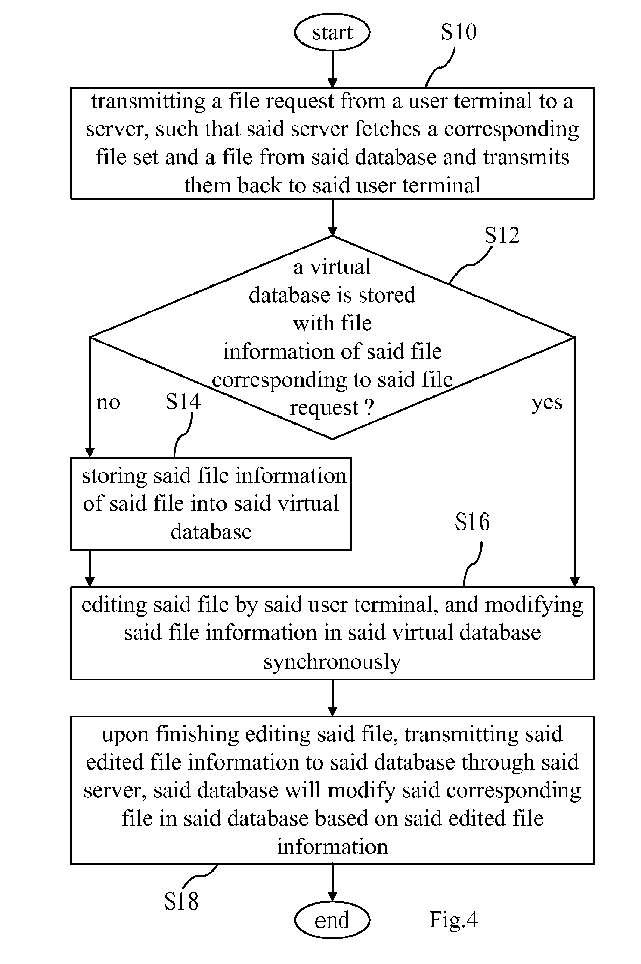

Then, refer to Fig. 4 for a flowchart of the steps of a network data access management method according to the present invention, meanwhile, refer to Fig. 2 and Figs. 3(a) to 3(c). Firstly, as shown in step S10, the client terminal 10 transmits a file request to a server 12, which will then fetch the corresponding file set 20 and the file 18 from a database 14 as based on the file request, and transmit it back to the client terminal 10; in the process mentioned above, upon receiving a file request, the server 12 will fetch file set 20 and the file 18 from a database 14, and it will also generate a web page and transmit it to the client terminal 10. Next, as shown in Step S12, in transmitting back file set 20 and the file 18 to the client terminal 10, the server 12 will determine if the file information of file set 20 and the file 18 corresponding to the file request is already in the virtual database 16, and in case that the answer is negative, then as shown in step S 14, store file information of the file set 20 and the file 18 into the virtual database 16; otherwise, in case that the answer if positive, then the server 12 will not perform storing of file information into the corresponding virtual database 16, instead, it will go directly to step S16.

Subsequently, as shown in step S16, when the client terminal 10 edits the file set 20 and the file 18, it will also make changes to the corresponding file information in the virtual database 16. Finally, as shown in step S18, upon finishing editing the file information, the virtual database 16 will transmit the edited file information to the database 14 via the server 12, such that the database 14 will make changes to the file set 20 and the file 18 as based on the edited file information.

In the process of editing file set 20 and the file 18, the client terminal 10 will send out file requests continuously to the database 14 for fetching file set 20 and the file 18. However, in order to reduce the number of access to the database 14, at the first time of fetching file set 20 and the file 18, the file information of which is transmitted and stored in the virtual database 16. And afterwards, when the file information of the file set 20 and the file 18 is required to be edited by the client terminal 10, it can be obtained from the virtual database 16, thus reducing the number of access to the database 14 and the bandwidth required.

From the description of embodiments mentioned above, it can be known that, in the present invention, file information of the file set 20 and the file 18 required to be edited is first transmitted and stored in the virtual database 16, and when the client terminal 10 performs editing of the file set 20 and the file 18, it will also make changes to the corresponding file information stored in the virtual database 16, then the edited file information is transmitted to the database 14 via the server 12, for the database 14 to make corresponding changes to the file set 20 and the file 18 as based on the edited file information. Therefore, in the present invention, it is only required to transmit and store file information of the file set 20 and the file 18 into the virtual database 16, the first time of fetching the file set 20 and the file 18 from the database 14, when the file information of which is not in the virtual database 16; and only the final edited file information of the file set 20 and the file 18 is transmitted from the virtual database 16 to the database 14 through the server 12. As such, it is able to reduce the number of access to the database 14 as done by the client terminal 10 through the server 12, hereby reducing the bandwidth required, and increasing significantly the efficiency of editing file 18 in the database 14 through the client terminal 10.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements which are within the scope of the appended claims.

## Claims

1. A network data access management system, comprising:
a database, including at least a file;
a server, connected to said database;
a client terminal, connected to said server, said client terminal transmits a file request to said server, and said server fetches a file corresponding to said file request from said database and transmits it back to said client terminal; and
a virtual database, connected to said server and said client terminal, and when said file is transmitted back to said client terminal, file information of said file is stored in said virtual database, and when said client terminal edits said file, said file information stored in said virtual database is also edited and changed, and said edited file information is transmitted to said database through said server, and said database will modify said file in said database as based on said edited file information.

2. The network data access management system as claimed in claim 1, wherein said virtual database is built in said client terminal.

3. The network data access management system as claimed in claim 1, wherein said virtual database is provided with a same Document Object Model (DOM) structure as that of said database.

4. The network data access management system as claimed in claim 1, wherein said client terminal is connected to said server through logging onto a website.

5. The network data access management system as claimed in claim 1, wherein said file includes said file information of title, description, size ratio, security, and content type.

6. The network data access management system as claimed in claim 1, wherein said file is a drawing file, an image file, a text file, or an animation film file.

7. The network data access management system as claimed in claim 1, wherein a plurality of said files can be stored jointly as a file set.

8. The network data access management system as claimed in claim 7, wherein said file set contains said file set information of title, verification, description, and level.

9. The network data access management system as claimed in claim 1, wherein said client terminal is a computer device, a mobile communication device, or a personal data assistant (PDA).

10. The network data access management system as claimed in claim 1, wherein said client terminal and said server communicate with each other through a HyperText Transfer Protocol (HTTP).

11. A network data access management method, comprising following steps:
logging through a client terminal onto a website connected to a server, and said client terminal transmits a file request to said server;
said server fetches a file corresponding to said file request from a database as based on said file request, and transmits said file back to said client terminal, and also transmits and stores file information of said file into a virtual database; and
editing said file through said client terminal, and modifying said file information in said virtual database synchronously, and upon finishing editing said file, transmitting said file information to said database through said server, and said database will modify said corresponding file in said database as based on said edited file information.

12. The network data access management method as claimed in claim 11, wherein in a step of said client terminal transmitting said file request to said server, said client terminal transmits said file request to said server through a HyperText Transfer Protocol (HTTP).

13. The network data access management method as claimed in claim 11, wherein in said step of editing said file through said client terminal, said file information of title, description, size ratio, security, and content type in said virtual database is modified.

14. The network data access management method as claimed in claim 11, wherein in said step of fetching said file corresponding to said file request from said database, said file is a file set, and said file information of said file set is also stored in said virtual database, and through editing said file set by said client terminal, said file information of title, verification, description, and level is modified.
